# EUROPEAN PATENT SPECIFICATION

(11) **EP 1 355 086 B1**
(45) Date of publication and mention of the grant of the patent: **20.07.2011**
(21) Application number: 03252421.7
(22) Date of filing: 16.04.2003
(51) Int. Cl.: F16H 3/00

(54) **Automatic transmission for vehicle**
Automatgetriebe für Kraftfahrzeug
Transmission automatique d'un véhicule

(30) Priority: 16.04.2002 JP 2002113231; 16.04.2002 JP 2002113232
(43) Date of publication of application: 22.10.2003
(73) Proprietor: Fuji Jukogyo Kabushiki Kaisha, Tokyo (JP)
(72) Inventor: Kobayashi, Toshio, c/o Fuji Jukogyo KK, Shinjuku-ku, Tokyo (JP)
(74) Representative: W.P. Thompson & Co.

(56) References cited:
- EP-A1- 0 691 486
- EP-A2- 0 143 350
- EP-B1- 0 047 668
- DE-A1- 19 939 334
- GB-A- 2 186 333
- JP-A- 7 301 302
- JP-A- 8 093 861
- JP-A- 58 149 442
- JP-U- 60 194 648

## Description

### TECHNICAL FIELD OF THE INVENTION

The present invention relates to a parallel axes type automatic transmission for a vehicle, and more particularly to an automatic transmission of a transverse Trans-axle type in which a final reduction gear unit is housed.

### BACKGROUND OF THE INVENTION

The parallel axes type transmission has an input shaft provided with a plurality of drive gears; and an output shaft arranged in parallel with the input shaft and provided with a plurality of driven gears respectively engaged (or meshed) with the drive gears. In the transmission, a gear shift operation is carried out by a positive clutch to select a transmission gear train carrying out a power transmission among a plurality of transmission gear trains formed by the drive gears and the driven gears. In a manual transmission, a driver operates a shift lever, whereby the positive clutch is driven and the gear shift operation is carried out. Driving the positive clutch by a hydraulic actuator can achieve an automatic transmission having a base structure on the parallel axes type manual transmission.

Japanese Patent Application Laid-Open No. 60-256656 discloses a parallel axes type automatic transmission having such a structure that a power unit comprising an engine and a transmission is transversely arranged within an engine room (or compartment). This transmission has a drive shaft connected to a crankshaft of the engine, and two hollow input shafts which are concentrically (or coaxially) arranged in an outer side thereof and are respectively provided with a plurality of drive gears. A first friction clutch is arranged in one end portion of the drive shaft to connect one of the input shafts to the drive shaft, and a second friction clutch is arranged in the other end portion of the drive shaft to connect the other input shaft to the drive shaft. This transmission can obtain a predetermined transmission speed by selectively engaging the respective friction clutches and by switching any of the transmission gear trains into a power transmission state.

Further, Japanese Patent Application Laid-Open No. 10-89456 discloses a parallel axes type transmission provided with two friction clutches. This transmission has two input shafts which are concentrically arranged and are respectively provided with a plurality of drive gears. A friction clutch is provided between the respective one end portions of the respective input shafts and a crankshaft. The two friction clutches are switched when switching a positive clutch, and a shift operation is carried out while interlocking with a control of an electronic control throttle valve.

Further, Japanese Patent Application Laid-Open No. 11-264449 discloses a transmission which has an intermediate shaft provided with a drive gear and an output shaft provided with a driven gear, and in which a friction clutch for transmitting a rotation of a crankshaft of an engine to the intermediate shaft. A friction clutch for transmitting the rotation of the crankshaft to the output shaft via an accessory (or intermediate) axis is arranged in an extending (or a longitudinally) direction of the output shaft.

As mentioned above, when it is intended to smoothly carry out the shift operation in the automatic transmission on the basis of the mechanism of the manual transmission while interlocking the friction clutch with the positive clutch, there can be considered that two friction clutches are provided between the engine and the transmission, or in both ends of the transmission, as disclosed in the prior art mentioned above.

However, in the case that the conventional parallel axes type automatic transmission having two friction clutches are applied as the power unit in which the engine and the transmission are transversely arranged within the engine room in a forward (or front) side of a driver seat, the transmission including the friction clutches and devices for controlling an operation of the friction clutches becomes long and large. In particular, when it is intended to employ (or use) a wet type clutch in place of a dry type clutch as the friction clutch in consideration of a controllability, durability and reliability, space in the periphery of the transmission and freedom of designing the transmission itself are deteriorated, so that it is unavoidable that a whole length of the transmission is increased.

As disclosed in the respective publications mentioned above, in the transmission in which two friction clutches are provided between the engine and the transmission, or two friction clutches are arranged on an extended position of the input shaft, it is limited by the vehicle size in width to have the engine to increase a number of cylinders and the displacement, since the whole length of the transmission is increased.

Further, when the size of the transmission in the width direction becomes large, it is impossible to secure sufficient space for a crush stroke within the engine room for a head-on or side collision, so that there is an inconvenience that it is hard to satisfy a mountability of the transmission and that the outer appearance and the packaging of the vehicle are significantly affected.

Further, in the case of combining a diesel engine with the conventional transmission, it is necessary to assemble a mechanical damper in the transmission for damping a vibration of the engine, and the whole length of the transmission including the damper is increased. In particular, in the case that a torque converter is provided in the crankshaft of the engine, the whole length of the transmission including the torque converter is increased.

Since the friction clutches are arranged on the extension of the input shaft or the output shaft in the prior art as mentioned above, it is difficult to commonly use the parts of the manual transmission and production equipment (or facilities) to the full. Further, it is necessary to achieve a high functional control to increase or reduce an oil pressure for a delicate control of a starting clutch in order for smooth start of the vehicle or for carrying out a smooth gear shift without a shift shock. And the common use between the manual transmission and the automatic transmission must be abandoned (or sacrificed) in order to secure a high productivity.

Reference is also made to GB-A-2 186 333 which discloses a transmission according to the preambles of claims 1 and 2, having two clutches independently operable to provide increasing forward drive paths through gearing between an input shaft and output shafts. The gearing for the ratios is driven respectively through one and then the other clutch. Selector means is provided for selecting a plurality of forward ratios and a plurality of reverse ratios. With given forward and reverse ratios selected, a change from forward drive to reverse drive can be effected by driving through said one clutch then the other clutch.

### SUMMARY OF THE INVENTION

An object of the present invention is to provide an automatic transmission for a vehicle in which a size in an axial direction can be shortened.

Another object of the present invention is to provide the automatic transmission for the vehicle which is transversely arranged within an engine room.

The other object of the present invention is to provide the automatic transmission for the vehicle which has a damper for damping an engine vibration.

The other object of the present invention is to provide the automatic transmission for the vehicle which has a torque converter and can be shortened in a whole length.

The automatic transmission for the vehicle according to a first aspect of the present invention comprises:
a first input shaft provided with a plurality of drive gears;
a second input shaft concentrically provided in said first input shaft so as to freely rotate and provided with a plurality of drive gears;
an output shaft arranged in parallel with each of said input shafts and provided with the plurality of driven gears constantly engaging with said drive gears so as to respectively form transmission gear trains;
a plurality of clutches for switching said plurality of transmission gear trains between a power transmission state and a disconnection state;
an input switching shaft arranged in parallel with each of said input shafts and said output shaft;
a first friction engagement element provided in said input switching shaft for switching between a state of transmitting the power to said first input shaft and the state of disconnecting the power; and
a second friction engagement element provided to said input switching shaft and switching between a state of transmitting the power to said second input shaft and the state of disconnecting the power;
wherein the engine power is bypassed to said input switching shaft such that the engine power is transmitted to said output shaft via said first friction engagement element or said second friction engagement element;
characterized in that said transmission further comprises:
   a drive gear shaft arranged on an extension of said first and second input shafts;
   a drive side input gear mounted on said drive gear shaft for engaging with a driven side input gear mounted on said input switching shaft;
   a damper arranged between said crankshaft and said input switching shaft for damping an engine vibration and for transmitting the engine power to said input switching shaft, said drive gear shaft being mounted on an output portion of said damper.

In accordance with a second aspect of the present invention, there is provided an automatic transmission for a vehicle, comprising:
a first input shaft provided with a plurality of drive gears;
a second input shaft concentrically provided in said first input shaft so as to freely rotate and provided with a plurality of drive gears;
an output shaft arranged in parallel with each of said input shafts and provided with the plurality of driven gears constantly engaging with said drive gears so as to respectively form transmission gear trains;
a plurality of clutches for switching said plurality of transmission gear trains between a power transmission state and a disconnection state;
an input switching shaft arranged in parallel with each of said input shafts and said output shaft;
a first friction engagement element provided in said input switching shaft for switching between a state of transmitting the power to said first input shaft and the state of disconnecting the power;
a second friction engagement element provided to said input switching shaft and switching between a state of transmitting the power to said second input shaft and the state of disconnecting the power; and
a torque converter having an input portion connected to said crankshaft and an output portion rotatably connected to said input switching shaft and arranged between said crankshaft and said input switching shaft;
wherein the engine power is bypassed to said input switching shaft such that the engine power is transmitted to said output shaft via said first friction engagement element or said second friction engagement element;
characterized in that said transmission further comprises:
   a drive gear shaft arranged on an extension of said first and second input shafts; and
   a drive side input gear mounted on said drive gear shaft for engaging with a driven side input gear mounted on said input switching shaft;
   said drive gear shaft being mounted on said torque converter output portion.

In the automatic transmission for the vehicle according to the second aspect of the present invention, the torque converter may have a lockup clutch for connecting between the input portion and the output portion and is connected and disconnected for interlocking with an engagement of each of the friction clutches.

The automatic transmission for the vehicle according to the present invention may further comprise: a first switching gear rotatably provided to the input switching shaft and connected to an output portion of the first friction engagement element and engaged with a drive gear provided in the first input shaft; and a second switching gear rotatably provided on the input switching shaft and connected to the output portion of the second friction engagement element and engaged with the drive gear provided in the second input shaft.

In the automatic transmission for the vehicle according to the present invention, the first and second friction engagement elements may be provided between the first switching gear and the second switching gear.

In the automatic transmission for the vehicle according to the present invention, the first and second friction engagement elements may be provided in an end portion of the input switching shaft so as to be positioned in an outer side of the first switching gear and the second switching gear.

In the automatic transmission for the vehicle according to the present invention, the plurality of drive gears provided in the first input shaft may constitute shift gear trains of one of odd and even transmission speed ranges; and said plurality of drive gears provided in the second input shaft may constitute shift gear trains of the other of the odd and even transmission speed ranges.

The automatic transmission for the vehicle according to the present invention may further comprise a hydraulic pump provided with a drive side rotor and a driven side rotor and arranged in an end portion of the transmission; and a pump drive shaft which connects the crankshaft to the drive side rotor through inner portions of the first and second input shafts.

In the automatic transmission for the vehicle according to the present invention, the hydraulic pump may be provided to the transmission case; and a fluid discharged from the hydraulic pump may be supplied to a hydraulic equipment such as the torque converter and the friction clutch.

The automatic transmission for the vehicle according to the present invention may further comprise an electronic control throttle for adjusting an amount of an intake air of the engine so as to synchronously control the engine speed to an output shaft speed.

The automatic transmission for the vehicle according to the present invention may further comprise: a first reverse drive gear rotatably provided on the input switching shaft; a reverse driven gear provided on the output shaft so as to be engaged with the first reverse drive gear; a second reverse drive gear rotatably provided on the input switching shaft so as to be engaged with a drive gear on one of the first and second input shafts; and a reverse clutch for switching the first reverse drive gear and the second reverse drive gear to a connection state and a disconnection state.

The automatic transmission for the vehicle according to the present invention may further comprise: a reverse drive gear mounted on one of the first and second input shafts; a reverse driven gear provided on the output shaft so as to integrally rotate; an idler gear for switching and moving to a state of engaging with the reverse drive gear and the reverse driven gear and a state of disengaging therewith; and a reverse clutch for switching and moving the idler gear.

In the automatic transmission for the vehicle according to the present invention, the engine power may be set in the state of transmitting the engine power to the reverse driven gear via the idler gear; and any one of the two friction engagement elements may be set in a disengagement state for a predetermined time so as to changeover to a reverse range.

In the automatic transmission for the vehicle according to the present invention, each of the friction engagement elements may transmit the engine power to the output shaft, while gradually changing an engagement force therebetween in accordance with an accelerator opening degree and while sliding therewith in order to start the vehicle and to increase the engagement force therebetween at a predetermined vehicle speed or engine speed so as to directly connect to the output shaft.

In the automatic transmission for the vehicle according to the present invention, the output shaft and the elements assembled thereto may be commonly used with a manual transmission.

The automatic transmission for the vehicle according to the present invention has first and second concentric input shafts which are respectively provided with a plurality of drive gears, an output shaft which is provided with the driven gear engaging with the drive gears, and the input switching shaft which is arranged in parallel to the input shafts and the output shaft. Since the engine power is transmitted to the input switching shaft via the damper or the torque converter, and the engine power is transmitted to the input shafts from the input switching shaft, it is possible to shorten the whole length of the transmission including the damper or the torque converter. A plurality of clutches are provided between the input switching shaft and the input shafts, and it is possible to carry out the shift operation while transmitting the engine torque to the output shaft, by transmitting the engine power to the input shafts via any friction clutches. Since the whole length of the automatic transmission can be made the same size as that of the manual transmission, it is possible to use the parts (or components) such as the transmission case, the transmission gear train, the output shaft and the like constituting the automatic transmission as the parts for the manual transmission.

By way of example only, specific embodiments of the present invention will now be described, with reference to the accompanying drawings, in which:-
FIG. 1 is a skeleton view showing an automatic transmission for a vehicle in accordance with one embodiment of the present invention;
FIG. 2 shows a part of the automatic transmission in FIG. 1, and is a cross sectional view of the part along a line B-B in FIG. 3;
FIG. 3 is a cross sectional view in a direction along a line A-A in FIG. 2;
FIG. 4 is a schematic view showing a hydraulic control apparatus for controlling an operation of the automatic transmission;
FIG. 5 is a table of a power transmission showing an engagement state between two friction clutches in each of shift ranges and a gear ratio;
FIG. 6 is the skeleton view showing the automatic transmission in accordance with another embodiment of the present invention;
FIG. 7 is the skeleton view showing the automatic transmission in accordance with the other embodiment of the present invention;
FIG. 8 is the skeleton view showing the automatic transmission in accordance with the other embodiment of the present invention;
FIG. 9 is the skeleton view showing the automatic transmission in accordance with the other embodiment of the present invention;
FIG. 10 shows a part of the automatic transmission in FIG. 9, and is the cross sectional view of the part along the line D-D in FIG. 11;
FIG. 11 is the cross sectional view in a direction along the line C-C in FIG. 10;
FIG. 12 is the skeleton view showing the automatic transmission in accordance with the other embodiment of the present invention;
FIG. 13 is the skeleton view showing the automatic transmission in accordance with the other embodiment of the present invention; and
FIG. 14 is the skeleton view showing the automatic transmission in accordance with the other embodiment of the present invention.

### DESCRIPTION OF THE PREFERRED EMBODIMENTS

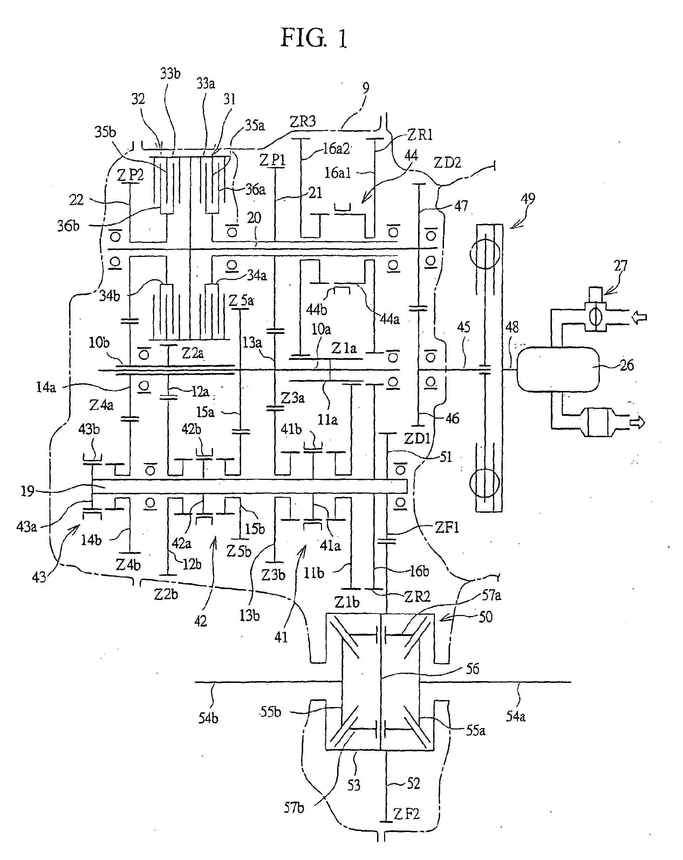

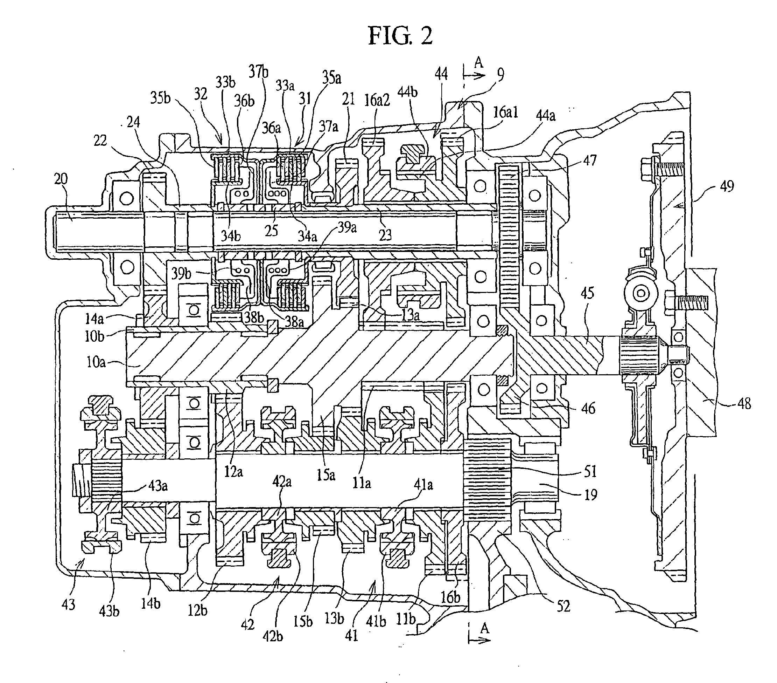

As shown in FIGs. 1 and 2, a first input shaft 10a is rotatably provided within a transmission case 9, a hollow second input shaft 10b is rotatably provided in an end portion of the first input shaft 10a via a needle bearing, and two inputs shafts 10a and 10b are concentrically arranged. The first input shaft 10a is integrally provided with a first speed drive gear 11a, a third speed drive gear 13a and a fifth speed drive gear 15a, respectively. On the other hand, the second input shaft 10b is integrally provided with a second speed drive gear 12a and a fourth speed drive gear 14a, respectively. In this case, the structure may be made such that the first input shaft 10a is hollow, and the first input shaft 10a is rotatably provided at an outer side of the second input shaft.

An output shaft 19 is rotatably provided within the transmission case 9 in parallel with the two concentric input shafts 10a and 10b, and the output shaft 19 is rotatably provided with driven gears 11b to 15b which constantly engage with the respective drive gears 11a to 15a so as to form transmission gear trains. The transmission gear trains provided between the first input shaft 10a and the output shaft 19 form the transmission gear trains of odd ranges consisting of the first speed, the third speed and the fifth speed, and the transmission gear trains provided between the second input shaft 10b and the output shaft 19 form the transmission gear trains of even ranges consisting of the second speed and the fourth speed.

An input switching shaft 20 is rotatably provided in the transmission case 9 in parallel with the respective input shafts 10a and 10b and the output shaft 19. This input switching shaft 20 is rotatably provided with a first switching gear 21 which is constantly engaged with the third speed drive gear 13a, and a second switching gear 22 which is constantly engaged with the fourth speed drive gear 14a. As shown in FIG. 2, the first switching gear 21 is fixed to a sleeve 23 which is rotatably fitted to an outer side of the input switching shaft 20, and the second switching gear 22 is integrally formed with a sleeve 24 which is rotatably fitted to the outer side of the input switching shaft 20.

As described above, the transmission has three shafts comprising the concentric input shafts 10a and 10b, the output shaft 19 which is in parallel with the input shafts 10a and 10b, and the input switching shaft 20 which is in parallel with the input shafts 10a and 10b and the output shaft 19, whereby it is possible to shorten the whole length of the transmission in the axial direction, it is possible to improve the mountability of the transmission without being restricted by the size in the width direction of the vehicle even when the engine and the transmission are transversely arranged within the engine room, and it is possible to secure a sufficient crush space within the engine room.

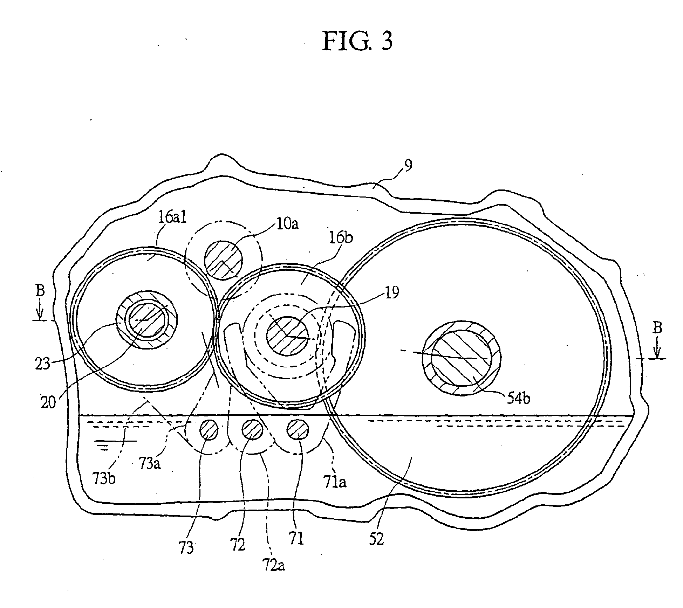

A first reverse drive gear 16a1 is rotatably provided in the input switching shaft 20, and a reverse driven gear 16b engaging with the first reverse drive gear 16a1 is integrally mounted to the output shaft 19, as shown in FIG. 3. FIG. 2 is a cross sectional view along an arrow B-B shown in FIG. 3. In FIGs. 1 and 2, the first reverse drive gear 16a1 and the reverse driven gear 16b are shown in a state in which the drive gear 16a1 and the reverse driven gear 16b are separated from each other, however, both gears 16a1 and 16b are directly engaged with each other as shown in FIG. 3. A second reverse drive gear 16a2 which is engaged with a drive gear 11a provided in the first input shaft 10a, is rotatably provided in the input switching shaft 20. A reverse transmission gear train is formed by two reverse drive gears 16a1 and 16a2 and the reverse driven gear 16b.

The input switching shaft 20 is provided with a multiple disc and wet type first friction clutch 31 and second friction clutch 32 as a friction engagement element, respectively. The first friction clutch 31 has a first clutch drum 33a which is mounted to a tube body 25 fixed to the input switching shaft 20, and has a clutch hub 34a fixed to the first switching gear 21. A plurality of friction plates 35a are assembled in an inner side of the clutch drum 33a, and a friction plate 36a is assembled in an inner side of the clutch hub 34a. As shown in FIG. 2, a hydraulic piston 37a is arranged within the first clutch drum 33a, and the respective friction plates 35a and 36a become in an engagement state by supplying an actuating fluid within an oil chamber 38a. When the engagement state is established as mentioned above, the input switching shaft 20 is connected to the first input shaft 10a via the first switching gear 21. When discharging the fluid, the engagement state is cancelled on the basis of a spring force by a return spring 39a. It is possible to adjust an engagement force of the friction plates 35a and 36a by adjusting a pressure of the fluid supplied within the oil chamber 38a.

The second friction clutch 32 has a second clutch drum 33b mounted on the tube body 25, and has a clutch hub 34b fixed to the second switching gear 22. Friction plates 35b and 36b are assembled between a clutch drum 33b and a clutch hub 34a, in the same manner as that of the first friction clutch 31. Further, when pressurizing a hydraulic piston 37b arranged within the second clutch drum 33b by the fluid supplied to an oil chamber 38b, the friction plates 35b and 36b become in the engagement state. When the engagement state is established as mentioned above, the input switching shaft 20 is connected to the second input shaft 10b via the second switching gear 22. When discharging the fluid, the engagement state is cancelled by the return spring 39b, and the engagement force of the friction plates 35b and 36b can be adjusted by adjusting the pressure of the fluid supplied within the oil chamber 38b.

A first positive clutch 41 is provided on the output shaft 19 for switching between a position for respectively changing the shift gear trains of the first speed and the third speed in a power transmission state, and a neutral position without transmitting any power to there. A second clutch 42 is provided to the output shaft 19 for switching between a position respectively changing the shift gear trains of the second speed and the fifth speed in the power transmission state, and the neutral position without transmitting any power to there. Further, a third clutch 43 is provided to the output shaft 19 for switching between the position for changing the shift gear train of the fourth speed in the power transmission state, and the neutral position without transmitting any power to there. A fourth positive clutch 44 is provided on the input switching shaft 20 for switching between the position for changing the reverse transmission gear train into the power transmission state, and the neutral position without transmitting any power to there.

The respective clutches 41 and 44 are formed by a synchro-mesh mechanism, that is, a synchronous engagement mechanism. And the clutches 41 to 43 have synchro- hubs 41a to 43a fixed to the output shaft 19, and synchro- sleeves 41b to 43b which integrally rotate therewith and are provided so as to freely move in an axial direction. Further, the fourth positive clutch 44 has a synchro-hub 44a provided in the first reverse drive gear 16a1, and a synchro-sleeve 44b which integrally rotates therewith and is provided so as to freely move in the axial direction. For example, when engaging the synchro-sleeve 41b of the first positive clutch 41 with the clutch gear and a synchronizer ring in the side of the first speed driven gear, the shift gear train of the first speed is switched to the power transmission state. In this case, in FIGs. 1 and 2, the synchronizer ring is omitted.

A drive gear shaft 45 is arranged on an extension of the input shafts 10a and 10b, and is rotatably provided to the transmission case 9. A driven side input gear 47 engaging with a drive side input gear 46 provided in the drive gear shaft 45 is mounted on the input switching shaft 20. A power of the engine 26 is input to the drive gear shaft 45, and the engine power is first transmitted to the input switching shaft 20 from the drive gear shaft 45. The engine 26 is provided with an electronic control throttle 27 which adjusts an engine torque and an engine speed, and an engine control is normally carried out by opening and closing the electronic control throttle 27 on the basis of an output signal from the electronic control apparatus in accordance with a pedaling (or stepping) amount of an accelerator pedal (not shown). Further, the electronic control throttle 27 opens and closes depending on the situation, not based on the pedaling amount of the acceleration pedal, but based on a preset map or the like in accordance with a detected driving condition, whereby the engine control is carried out.

In order to damp the engine vibration and transmit the engine power to the input switching shaft 20, a damper 49 is provided between the drive gear shaft 45 and a crankshaft 48 of the engine, and an output side of the damper 49 is fixed to the drive gear shaft 45.

A small reduction gear 51 of a final reduction gear unit 50 is mounted on the output shaft 19, the small reduction gear 51 is engaged with a large reduction gear 52, and the final reduction gear unit 50 is assembled within the transmission case 9. Two axles 54a and 54b respectively connected to drive wheels are rotatably attached to a differential case 53 mounted on the large reduction gear 52, and side gears 55a and 55b constituted by bevel gears are fixed to the respective axles 54a and 54b. Pinion gears 57a and 57b respectively engaging with the side gears 55a and 55b are rotatably mounted to a pinion shaft 56 which is fixed to the differential case 53 so as to extend in a perpendicular direction to the axles 54a and 54b.

In order to switch each of the transmission gear trains for the first speed to the fifth speed and the transmission gear train for reverse in the transmission mentioned above between the power transmission state and the disconnection state, as shown in FIG. 3, three fork rods 71 to 73 are provided within the transmission 9 in parallel with the output shaft 19 so as to freely oscillate in the axial direction. A shifter fork 71a mounted on the first fork rod 71 is engaged with the synchro-sleeve 41b, and a shifter fork 72a mounted to a second fork rod 72 is engaged with the synchro-sleeve 42b. Further, a shifter fork 73a engaged with the synchro-sleeve 43b and a shifter fork 73b engaged with the synchro-sleeve 44b are mounted to a third fork rod 73.

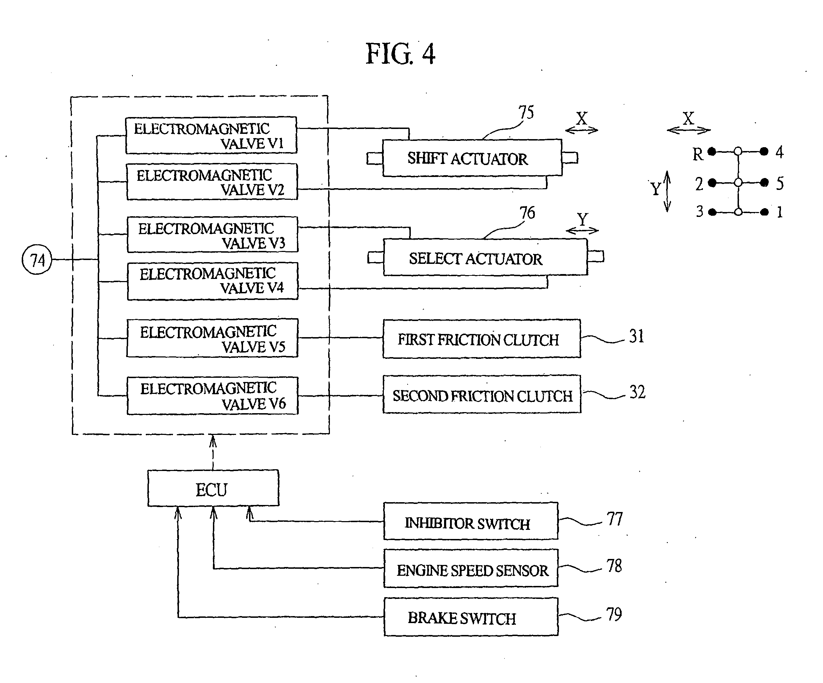

FIG. 4 is a schematic view showing a hydraulic control apparatus for controlling an operation of the automatic transmission as mentioned above. The shift gear operation is automatically carried out by supplying the fluid supplied from a pump 74 which is driven by the engine or an electric motor to two hydraulic actuators comprising a shift actuator 75 and a select actuator 76, and supplying the fluid to the hydraulic pistons 37a and 37b of two friction clutches 31 and 32. The shift actuator 75 is structured such as to linearly reciprocate in the direction shown by an arrow X and be positioned and stopped at two positions. The select actuator 76 is structured such as to linearly reciprocate in the direction shown by the arrow Y and be positioned and stopped at three positions. The linear reciprocating movements are transmitted to the fork rods 71 to 73 via a link mechanism (not shown). It is selected on the basis of the operation of the select actuator 76 which of three fork rods 71 to 73 is operated by the shift actuator 75, and each of the fork rods 71 to 73 is driven by the shift actuator 76. Any one of the transmission speed ranges of the first to fifth speeds and the reverse range is set on the basis of the driving of the two actuators 75 and 76.

As shown in FIG. 4, in order to adjust the pressure of the fluid which is supplied to the shift actuator 75, the select actuator 76 and the hydraulic pistons 37a and 37b of two friction clutches 31 and 32 from the hydraulic pump 74, the structure is made such that a control signal is transmitted to electromagnetic valves V1 to V6 from an electronic control unit ECU. To the electronic control unit ECU, there are transmitted detection signals which are output from various kinds of sensors such as an inhibitor switch 77 for detecting which the driver selects in a drive range, a reverse range, a parking range and a neutral range by a select lever, an engine speed sensor 78 for detecting an engine speed, a brake switch 79 for detecting that the brake is operated, and the like.

In the automatic transmission as mentioned above, when the vehicle is running by the first speed range, the first friction clutch 31 is in an engagement state, and the synchro-sleeve 41b of the first positive clutch 41 is engaged with the driven gear 11b of the first speed. Accordingly, the engine power which is transmitted to the input switching shaft 20 from the engine via the damper 49 is transmitted to the output shaft 19 via the first friction clutch 31 and the first speed transmission gear train. When the vehicle is running by the second speed range, the second friction clutch 32 is in the engagement state, and the synchro-sleeve 42b of the second positive clutch 42 is engaged with the driven gear 12b of the second speed. Accordingly, the engine power which is transmitted to the input switching shaft 20 from the engine 26 via the damper 49 is transmitted to the output shaft 19 via the second friction clutch 32 and the second speed transmission gear train.

Further, in the third speed range, the first friction clutch 31 is in the engagement state, and the first clutch 41 is engaged with the driven gear 13b, and in the fourth speed range, the second friction clutch 32 is in an engagement state, and the third clutch 43 is engaged with the driven gear 14b. In the fifth speed range, the first friction clutch 31 is in the engagement state, and the second clutch 42 is engaged with the driven gear 15b. Further, when the reverse range is selected, the first friction clutch 31 is in the engagement state, and the fourth clutch 44 is engaged with the second reverse drive gear 16a2.

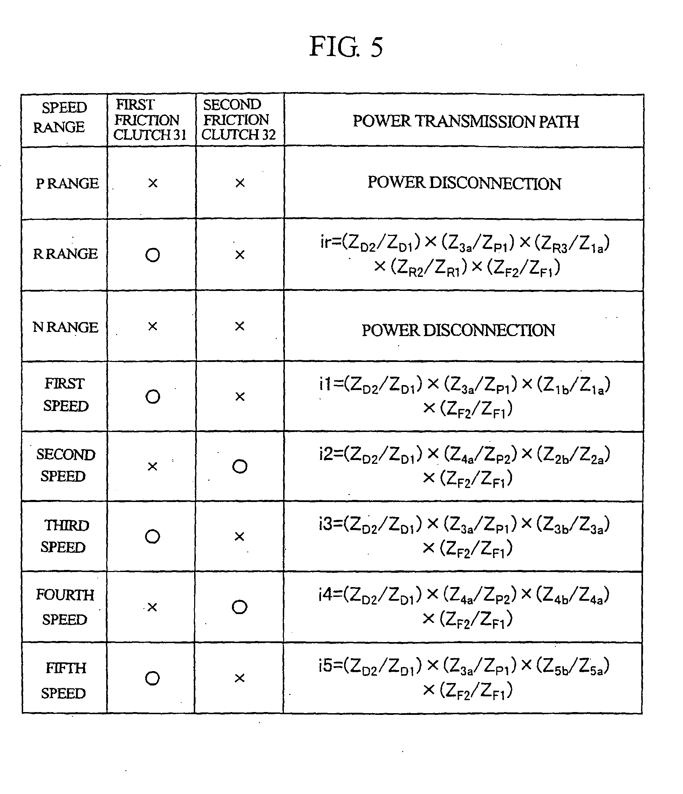

FIG. 5 shows a power transmission table showing engagement states of two friction clutches 31 and 32 and a gear ratio in each of the transmission speed ranges. In FIG. 5, a P range indicates a parking range, an R range indicates a reverse range and an N range indicates a neutral range, and in each of the friction clutches 31 and 32, mark [○] indicates an engaging state, and [×] indicates a disengaging state. Further, reference symbols Z1a to Z5a denote a number of teeth of the first to fifth speed drive gears 11a to 15a, and reference symbols Z1b to Z5b denote the number of the teeth of the first to fifth speed driven gears 11b to 15b. Further, a reference symbol ZP1 denotes the number of the teeth of the first switching gear 21, reference symbol ZR2 denotes the number of the teeth of the second switching gear 22, a reference symbol ZR1 denotes the number of the teeth of the reverse drive gear 16a, a reference symbol ZR2 denotes the number of teeth of the reverse driven gear 16b, a reference symbol ZR3 denotes the number of the teeth of an idler gear 17, a reference symbol ZF1 denotes the number of the teeth of the small reduction gear 51, a reference symbol ZF2 denotes the number of the teeth of the large reduction gear 52, a reference symbol ZD1 denotes the number of the teeth of the drive side input gear 46, and a reference symbol ZD2 denotes the number of the teeth of the driven side input gear 47, respectively. A gear ratio of the first speed is about 3.3, the gear ratio of the second speed is about 2.1, the gear ratio of the third speed is about 1.3, the gear ratio of the fourth speed is about 1.0, the gear ratio of the fifth speed is about 0.8, and the gear ratio of the reverse range is about 3.5.

Next, a description will be given of a shift gear operation in the automatic transmission as mentioned above. First, when the driver operates the operation (or shift) lever, that is, the select lever to a neutral position or a parking position, two friction clutches 31 and 32 are in a disconnection state, and the respective positive clutches 41 and 44 are in a neutral position. In this state, the engine power is not transmitted to the drive wheel.

Next, in order to start the vehicle from the stop state by the first speed, the first speed transmission gear train is set to the power transmission state by engaging the synchro-sleeve 41b of the first positive clutch 41 with the first speed driven gear 11b, thereby loosely engaging the first friction clutch 31 in the side of the odd ranges. Accordingly, the engine power is transmitted to the first speed shift gear trains via the input switching shaft 20, the engine torque is transmitted to the output shaft 19 while being smoothly slipped by strengthening the engagement force of the first friction clutch 31 in correspondence to the accelerator operation, and when the vehicle speed or the engine speed becomes equal to or more than a predetermined vehicle speed or engine speed, the first friction clutch 31 is set to a connection state. On the other hand, in order to start the vehicle on a slippery road surface such as a snowy road or the like, for example, the second speed transmission gear train is set to the power transmission state by engaging the synchro-sleeve 42b of the second positive clutch 42 with the second speed driven gear 12b so as to carry out the power transmission via the second speed transmission gear train corresponding to the even range, thereby gradually increasing the engagement force of the second friction clutch 32. Accordingly, no rapid driving force is applied to the drive wheel, and it is possible to start the vehicle while the wheels securely grip the road surface even in the case of the slippery road surface.

In accordance with the running state of the vehicle, for example, when the gear is shifted from the first speed to the second speed, the shift gear train of the second speed is switched to the state capable of transmitting the power by engaging the synchro-sleeve 42b of the second clutch 42 with the second speed driven gear 12b in accordance with a gear shift speed graph, a gear shift map or the like which is previously determined on the basis of the vehicle speed, the accelerator opening degree and the like. In the manner mentioned above, under the state in which an up-shift to the second speed can be carried out, the second friction clutch 32 is engaged, the first friction clutch 31 is disconnected and the synchro-sleeve 41b of the positive clutch 41 is returned to the neutral position.

In the other up-shift gear change such as the up-shift from the second speed to the third speed, it is possible to carry out the gear shift operation in the same manner by engaging and disengaging two friction clutches 31 and 32. As mentioned above, in the case of carrying out the up-shift, it is possible to secure a smooth gear shift function without generating any gear shift shock, by smoothly engaging and disengaging the two friction clutches in accordance with a clutch-to-clutch gear shift manner in a planetary gear type automatic transmission. As mentioned above, in the gear shift operation per one range, the two friction clutches 31 and 32 for the odd ranges and the even ranges are alternately operated.

Further, when the vehicle is running backwardly, the friction clutch 31 is engaged after the synchro-sleeve 44b of the clutch 44 is engaged with the second reverse drive gear 16a2.

On the other hand, for example, in the case of rapidly returning the accelerator pedal under the state in which the vehicle speed reaches a predetermined speed after the acceleration is started, there is the case that a jump gear shift from the first speed to the third speed or the fourth speed or the like is carried out. In this case, the up-shift is carried out from the odd range to the even range in accordance with the manner as mentioned above. On the contrary, in the case that the gear shift is carried out between the odd ranges, such as the up-shift from the first speed to the third speed, the friction clutch 31 in the engagement state is temporarily disengaged, the synchro-sleeve 41b of the positive clutch 41 is engaged with the third speed driven gear 13b, and next the friction clutch 31 is engaged. In the manner mentioned above, it is possible to smoothly carry out the jump gear shift without generating any shift shock.

Further, in the case of carrying out a down-shift gear change, it is also possible to carry out the down-shift by controlling the respective clutches of two friction clutches 31 and 32 basically in the same manner as that of the up-shift gear change. The down-shift gear change can carry out not only the normal speed reduction but also the jump gear shift.

At a time of the gear shift operation mentioned above, the electronic control throttle 27 is provided in the engine 26, so that it is possible to smoothly carry out the gear shift operation by controlling the engine speed in correspondence to the operation of the respective friction clutches 31 and 32 and the operation of the clutch.

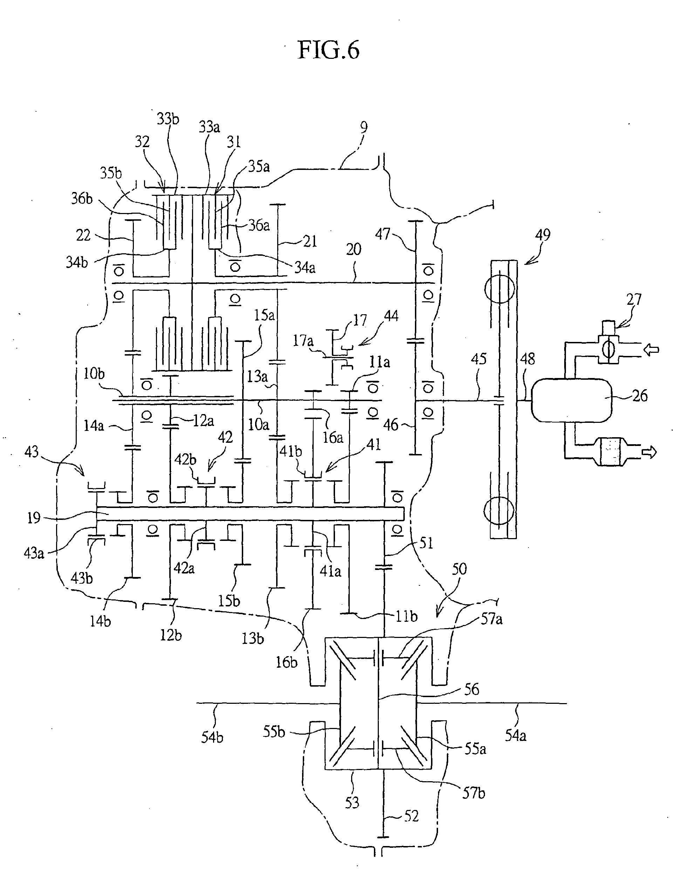

FIG. 6 is a skeleton view showing an automatic transmission for a vehicle in accordance with another embodiment of the present invention. In FIG. 6, the same reference numerals are attached to the common members with the members shown in FIG. 1. The automatic transmission is different in the structure of the shift gear train in the reverse range from the case mentioned above, the reverse drive gear 16a is integrally provided in the first input shaft 10a, and the reverse driven gear 16b is mounted on the synchro-sleeve 41b of the first clutch 41. The idler gear 17 is provided in the idle shaft 17a so as to freely move to a position engaging with the gears 16a and 16b and to the position moving apart from the gears 16a and 16b, and the idler gear 17 is driven to the engaging position and the disengaging position by the clutch 44. Accordingly, when engaging the idler gear 17 with both of the gears 16a and 16b at a time when the engaging clutch 41 is at a neutral position, the transmission becomes in the reverse range.

In FIG. 6, the idler gear 17 is shown in a state of being engaged with only the reverse drive gear 16a for reference, however, the idler gear 17 is engaged with as well as the reverse driven gear 16b. The engaging clutch 44 for moving the idler gear 17 to the position engaging with both of the gears 16a and 16b and the position disengaging therewith is constituted by a selectively sliding type clutch. In this case, when the driver operates the shift lever to a reverse position, the friction clutch 31 is set to the disengagement state, and first, the idler gear 17 is engaged with the reverse drive gear 16a and the reverse driven gear 16b by the engaging clutch 44. As mentioned above, the reverse range is set by setting the friction clutch 31 to the engagement state after setting to the power transmission state via the idler gear 17. When carrying out the gear shift operation to the reverse range as mentioned above, it is possible to smoothly carry out the gear shift operation without generating a gear noise even if the selectively sliding type clutch as the engaging clutch for reverse is provided.

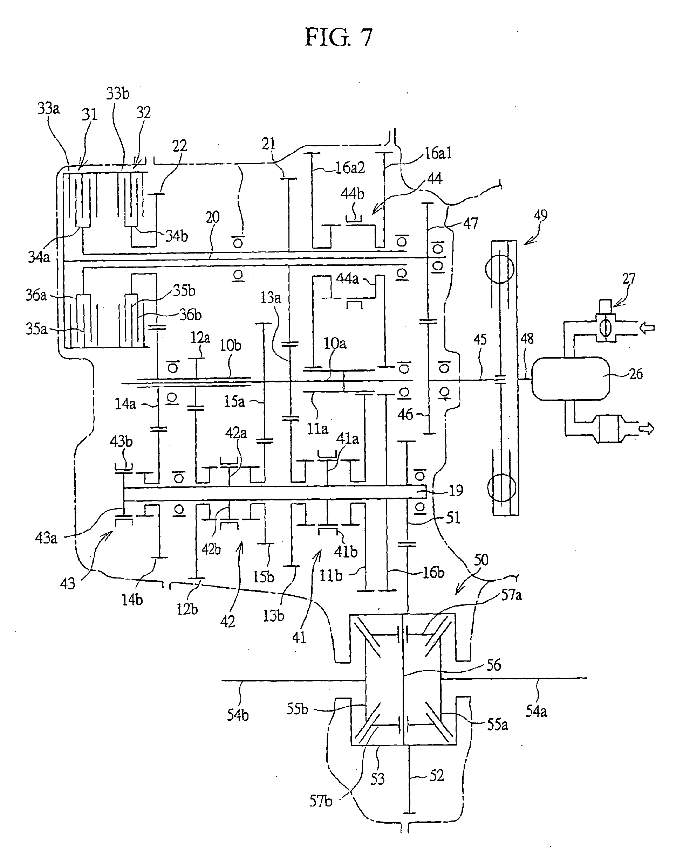

FIG. 7 is a skeleton view showing an automatic transmission for a vehicle in accordance with another embodiment of the present invention. In FIG. 7, the same reference numerals are attached to the common members with the members shown in FIG. 1. Two friction clutches 31 and 32 in this automatic transmission are arranged in end portions of the input switching shaft 20, it is possible to make an outer shape of the friction plates of the friction clutches 31 and 32 larger than the case shown in FIG. 1, and it is possible to apply even to the case that the torque transmission is higher. In this case, clutch drums 33a and 33b of the friction clutches 31 and 32 can be formed by one drum.

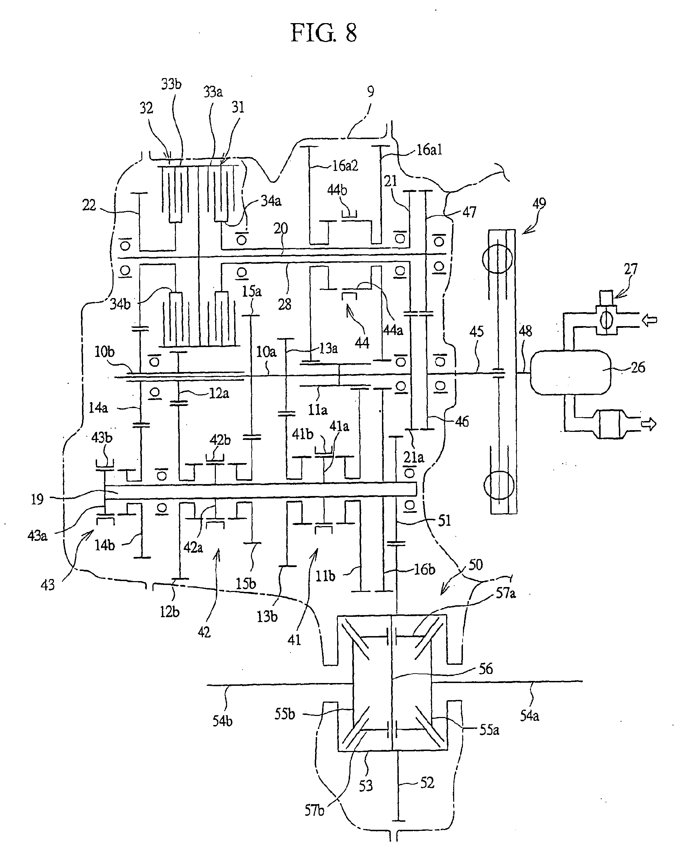

FIG. 8 is a skeleton view showing an automatic transmission for a vehicle in accordance with another embodiment of the present invention. In FIG. 8, the same reference numerals are attached to the common members with the members mentioned above. In this automatic transmission, a hollow shaft 28 is rotatably provided in an outer side of the input switching shaft 20, a clutch hub 34a of the friction clutch 31 is fixed to one end portion of the hollow shaft 28, and the first switching gear 21 is fixed to another end portion. This switching gear 21 is arranged between the first reverse drive gear 16a1 and the driven side input gear 47, and is engaged with the drive gear 21a fixed to the first input shaft 10a. Accordingly, the structure is made in this transmission such that the engine power of the first input shaft 10a is transmitted from the input switching shaft 20 via the drive gear 21a which does not constitute the transmission speed range, while the structure is made in the transmission mentioned above such that the engine power is transmitted from the input switching shaft 20 to the first input shaft 10a via the third speed drive gear 13a. A number of the teeth of the drive gear 21a is set approximately the same as that of the drive gear 13a.

On the other hand, the engine power is transmitted from the input switching shaft 20 to the second input shaft 10b via the second switching gear 22 engaging with the fourth speed drive gear 14a, in the same manner as that of the transmission as mentioned above. As described above, the transmission of the engine power from the input switching shaft 20 to the first and second input shafts 10a and 10b may be carried out via the transmission gears, or may be carried out via the other gears for transmitting the power than the transmission gears. Even in the transmission of the type shown in FIG. 8, the reverse gear train may be structured as shown in FIG. 6, and two friction clutches 31 and 32 may be arranged as shown in FIG. 7.

Various kinds of parts constituting the respective automatic transmission mentioned above can be used as parts of the manual transmission as they are. For example, it is possible to commonly use the transmission case, the output shaft 19, the shift gear train and the like as the parts of the manual transmission as they are, by setting the first and second input shafts 10a and 10b in the illustrated automatic transmission to one input shaft, detaching the friction clutches 31 and 32 and replacing the input switching shaft 20. Further, it is possible to commonly use the production facility of the transmission between the automatic transmission and the manual transmission.

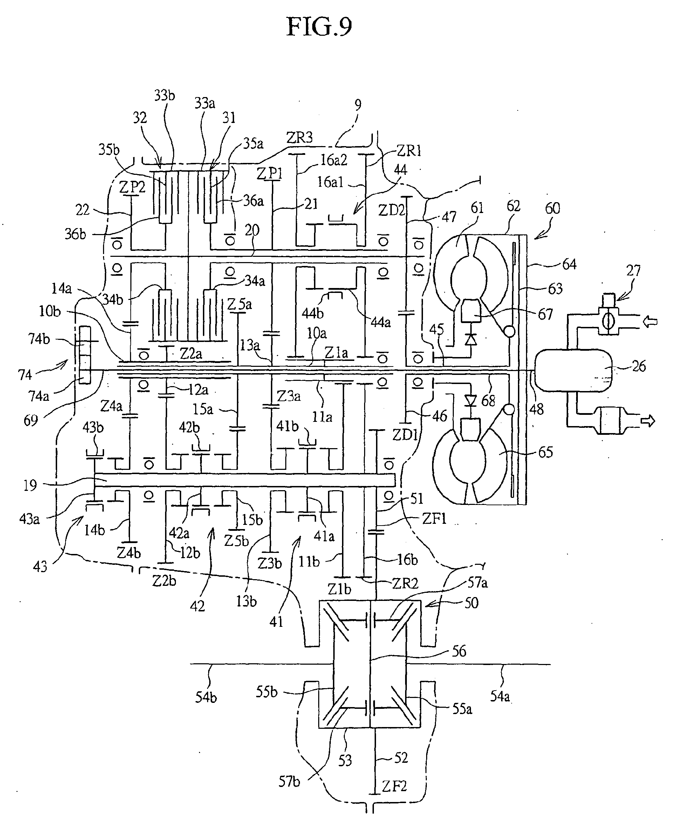

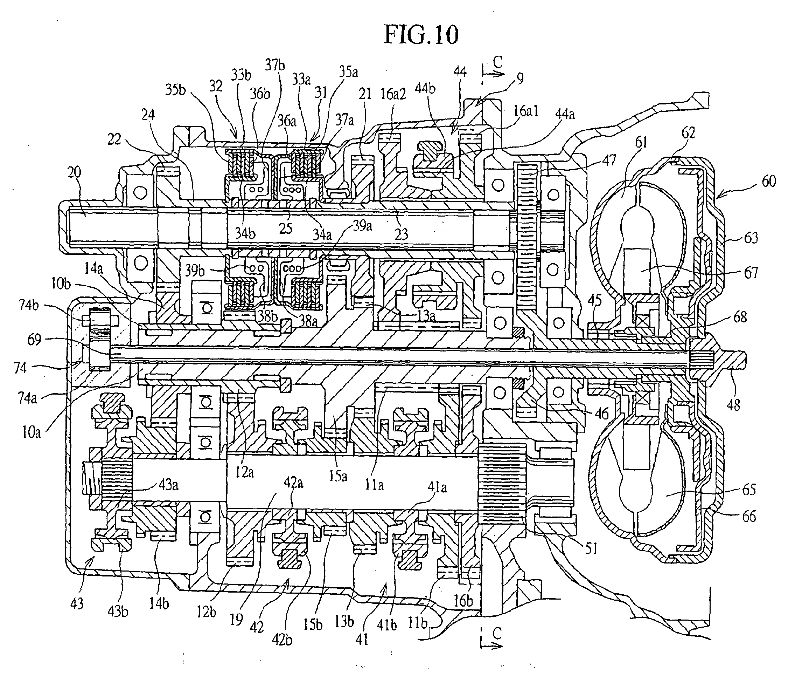

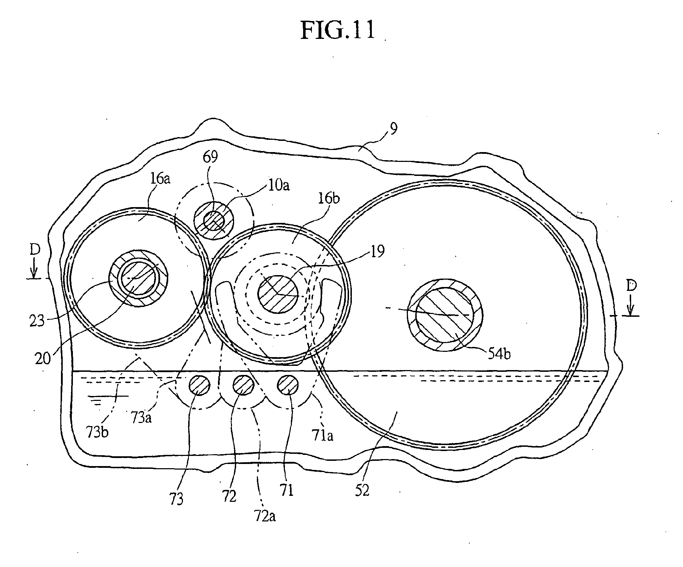

FIG. 9 is the skeleton view showing the automatic transmission for the vehicle in accordance with the other embodiment of the present invention, Fig 10 is the cross sectional view showing a part of the automatic transmission in Fig 9, and Fig 11 is the cross sectional view in the direction along a line C-C in Fig 10. In these drawings, the same reference numerals are attached to the common members with the members mentioned above. In this automatic transmission, in order to transmit the engine power to the input switching shaft 20, a torque converter 60 is provided between the drive gear shaft 45 and the crankshaft 48 of the engine, in place of the damper 49 mentioned above.

As shown in FIG. 10, the torque converter 60 has an outer shell 62 provided with a pump impeller 61, and a front cover 63 fixed thereto, and the front cover 63 is fixed to a drive plate 64 mounted to the crankshaft 48. A turbine runner 65 is arranged so as to oppose to the pump impeller 61, the turbine runner 65 is connected to the drive gear shaft 45 via a turbine output shaft 68, and a lockup clutch 66 is fixed to the turbine runner 65. A stator 67 arranged between the pump impeller 61 and the turbine runner 65 is arranged in an outer side of the drive gear shaft 45 via a one-way clutch.

A pump drive shaft 69 rotatably extends through inner portions of the concentric (or coaxial) first and second input shafts 10a and 10b, and one end portion of this pump drive shaft 69 is connected to the crankshaft 48 through the center portion of the torque converter 60. A hydraulic pump 74 is arranged in the transmission case 9 so as to be positioned at the end portion of the transmission, the hydraulic pump 74 has a drive side rotor 74a and a driven side rotor 74b, and another end portion of the pump drive shaft 69 is connected to the drive side rotor 74a. The structure is made such that the fluid discharged from the hydraulic pump 74 is supplied to the hydraulic devices such as the friction clutches 31 and 32, the torque converter 60 and the like.

In the automatic transmission shown in FIGs. 9 and 10, when the vehicle is running by the first speed range, the first friction clutch 31 is in the engagement state, and the synchro-sleeve 41b of the first clutch 41 is engaged with the driven gear 11b of the first speed. Accordingly, the engine power which is transmitted to the input switching shaft 20 from the engine via the torque converter 60 is transmitted to the output shaft 19 via the first friction clutch 31 and the first speed transmission gear train. When the vehicle is running by the second speed range, the second friction clutch 32 is in the engagement state, and the synchro-sleeve 42b of the second clutch 42 is engaged with the driven gear 12b of the second speed. Accordingly, the engine power which is transmitted to the input switching shaft 20 from the engine via the torque converter 60 is transmitted to the output shaft 19 via the second friction clutch 32 and the second speed transmission gear train.

As described above, the torque converter 60 provided with the lockup clutch 66 is provided between the drive gear shaft 45 and the crankshaft 48, and the electronically controlled throttle is provided in the engine, so that it is possible to smoothly carry out the gear shift control by controlling the engine power into a direct connection state of transmitting the engine power to the input shaft by engaging the lockup clutch 66 and into the state of disconnecting the lockup clutch 66, and by controlling the engagement and the disengagement of two friction clutches 31 and 32. For example, in the case of jump shifting gears from the first speed to the third speed or the fifth speed, or inversely jump shifting gear from the fifth speed to the second speed or the third speed, the driving force rapidly changes due to the large difference of the gear shift ratio, however, it is possible to smoothly switch the transmission speed range by accelerating the rotation of the engine or controlling the connection degree of the lockup clutch 66 so as to reduce the gear shift shock.

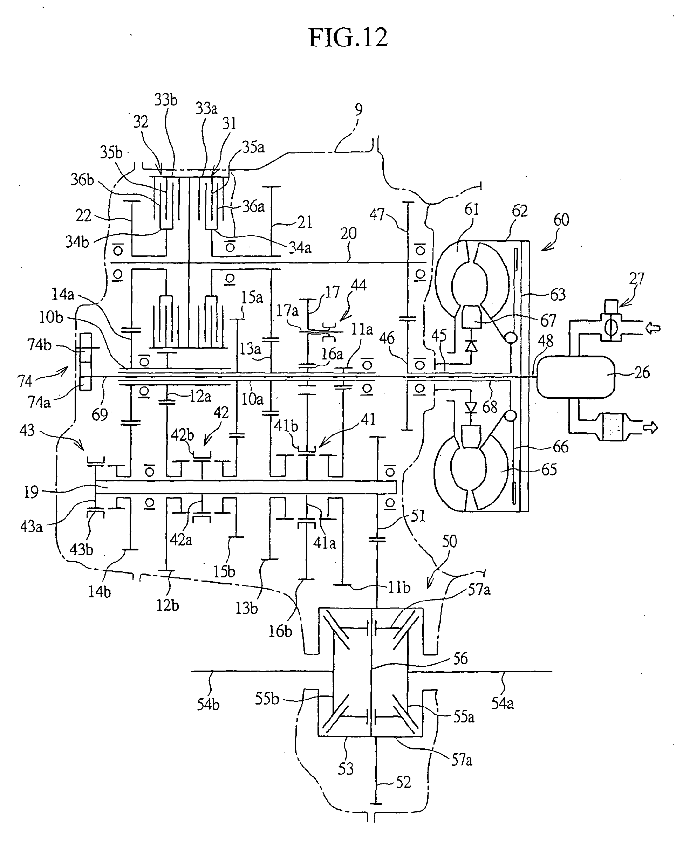

An automatic transmission shown in FIG. 12 is structured in the same manner as the automatic transmission shown in FIG. 9 such that the torque converter 60 is provided between the drive gear 45 and the crankshaft 48, and is structured in the same manner as the automatic transmission shown in FIG. 6 such that the reverse drive gear 16a is integrally provided in the first input shaft 10a, and the reverse driven gear 16b is mounted on the synchro-sleeve 41b of the first positive clutch 41. The idler gear 17 is provided in the idle shaft 17a so as to freely move to a position engaging with the gears 16a and 16b and to the position moving apart from the gears 16a and 16b, and the idler gear 17 is driven to the engaging position and the disengaging position by the positive clutch 44. Accordingly, when engaging the idler gear 17 with both of the gears 16a and 16b at a time when the engaging clutch 41 is at a neutral position, the transmission becomes in the reverse range.

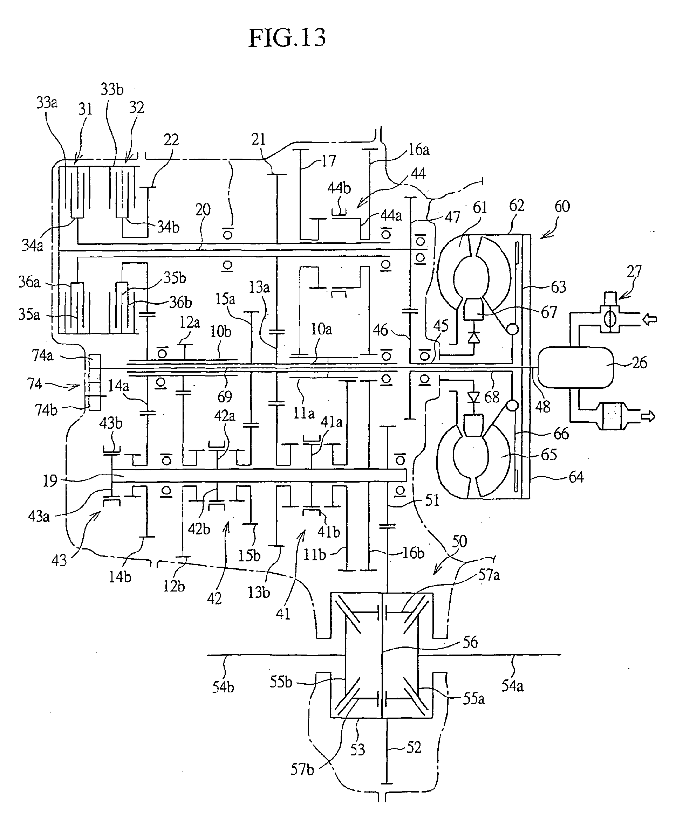

An automatic transmission shown in FIG. 13 is structured in the same manner as the automatic transmission shown in FIG. 9 such that the torque converter 60 is provided between the drive gear 45 and the crankshaft 48, and is structured in the same manner as the automatic transmission shown in FIG. 7 such that two friction clutches 31 and 32 are arranged in the end portion of the input switching shaft 20, it is possible to increase the outer shape of the friction plates in the friction clutches 31 and 32 in comparison with the case shown in FIG. 1, and it is possible to apply the structure even in the case that the torque transmission is higher.

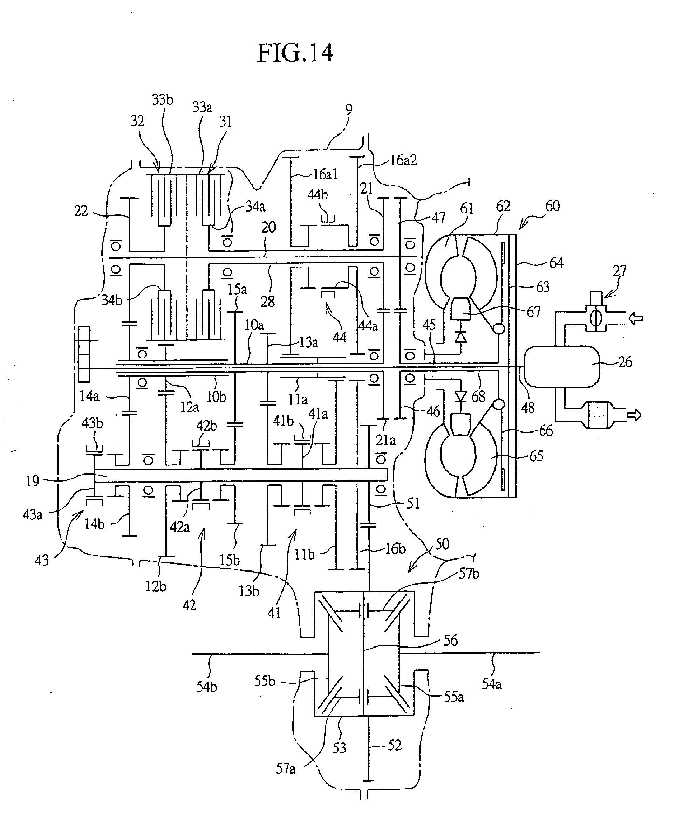

An automatic transmission shown in FIG. 14 is structured in the same manner as the automatic transmission shown in FIG. 9 such that the torque converter 60 is provided between the drive gear 45 and the crankshaft 48, and is structured in the same manner as the automatic transmission shown in FIG. 8 such that the hollow shaft 28 is rotatably provided in an outer side of the input switching shaft 20, a clutch hub 34a of the friction clutch 31 is fixed to one end portion of the hollow shaft 28, and the first switching gear 21 is fixed to another end portion. This switching gear 21 is arranged between the first reverse drive gear 16a1 and the driven side input gear 47, and is engaged with the drive gear 21a fixed to the first input shaft 10a. Accordingly, the structure is made in this transmission such that the engine power of the first input shaft 10a is transmitted from the input switching shaft 20 via the drive gear 21a which does not constitute the transmission speed range, while the structure is made in the transmission mentioned above such that the engine power is transmitted from the input switching shaft 20 to the first input shaft 10a via the third speed drive gear 13a.

In the automatic transmission mentioned above, the input switching shaft is arranged in parallel with the concentric first and second input shafts respectively provided with a plurality of drive gears and to the output shaft provided with the driven gear engaging with the drive gear. Further, since the structure is made such that the engine power is transmitted to the input shaft via the damper or the torque converter and the input switching shaft, it is possible to shorten the whole length of the transmission including the damper. Since it is possible to shorten the whole length of the transmission, it is possible to secure a sufficient crush space within the engine room. Since a plurality of the friction clutches are provided between the input switching shaft and the input shaft, it is possible to smoothly carry out the gear shift operation by switching the respective friction clutches, and it is possible to smoothly carry out the jump gear shift. Since it is possible to make the whole length of the automatic transmission the same length of the manual transmission, it is possible to use the common parts such as the transmission case, the shift gear train, the output shaft and the like which constitute the automatic transmission as the parts of the manual transmission, and it is possible to commonly use the respective production equipment.

The present invention is not limited to the embodiments mentioned above, and can be variously changed within the range of the scope. For example, each of two friction clutches 31 and 32 is the multiple disc wet type hydraulic clutch, however, may employ an electromagnetic clutch. Further, the number of the transmission speed ranges is set to the forward five speed ranges in the illustrated case, however, may be set to six speed ranges. Further, in the illustrated transmission, the input shaft is formed by two components comprising the first and second input shafts, however, the structure may be made such that three or more input shafts are provided and the engine power is transmitted to the input shafts from the input switching shaft 20 via three or more power transmission paths. Further, the hydraulic pump 74 may be driven not by the engine but by the electric motor.

## Claims

1. An automatic transmission for a vehicle, comprising:
a first input shaft (10a) provided with a plurality of drive gears (11a, 13a, 15a);
a second input shaft (10b) concentrically provided in said first input shaft so as to freely rotate and provided with a plurality of drive gears (12a, 14a);
an output shaft (19) arranged in parallel with each of said input shafts (10a, 10b) and provided with the plurality of driven gears (11b, 12b, 13b, 14b, 15b) constantly engaging with said drive gears (11a, 12a, 13a, 14a, 15a) so as to respectively form transmission gear trains;
a plurality of clutches (41-43) for switching said plurality of transmission gear trains between a power transmission state and a disconnection state;
an input switching shaft (20) arranged in parallel with each of said input shafts (10a, 10b) and said output shaft (19);
a first friction engagement element (31) provided in said input switching shaft (20) for switching between a state of transmitting the power to said first input shaft (10a) and the state of disconnecting the power; and
a second friction engagement element (32) provided to said input switching shaft (20) and switching between a state of transmitting the power to said second input shaft (10b) and the state of disconnecting the power;
wherein the engine power is bypassed to said input switching shaft (20) such that the engine power is transmitted to said output shaft via said first friction engagement element (31) or said second friction engagement element (32);
**characterized in that** said transmission further comprises:
a drive gear shaft (45) arranged on an extension of said first and second input shafts;
a drive side input gear (46) mounted on said drive gear shaft (45) for engaging with a driven side input gear (47) mounted on said input switching shaft (20);
a damper (49) arranged between said crankshaft (48) and said input switching shaft (20) for damping an engine vibration and for transmitting the engine power to said input switching shaft, said drive gear shaft (45) being mounted on an output portion of said damper (49).

2. An automatic transmission for a vehicle, comprising:
a first input shaft (10a) provided with a plurality of drive gears (11a, 13a, 15a);
a second input shaft (10b) concentrically provided in said first input shaft so as to freely rotate and provided with a plurality of drive gears (12a, 14a);
an output shaft (19) arranged in parallel with each of said input shafts (10a, 10b) and provided with the plurality of driven gears (11b, 12b, 13b, 14b, 15b) constantly engaging with said drive gears (11a, 12a, 13a, 14a, 15a) so as to respectively form transmission gear trains;
a plurality of clutches (41-43) for switching said plurality of transmission gear trains between a power transmission state and a disconnection state;
an input switching shaft (20) arranged in parallel with each of said input shafts (10a, 10b) and said output shaft (19);
a first friction engagement element (31) provided in said input switching shaft (20) for switching between a state of transmitting the power to said first input shaft (10a) and the state of disconnecting the power;
a second friction engagement element (32) provided to said input switching shaft (20) and switching between a state of transmitting the power to said second input shaft (10b) and the state of disconnecting the power; and
a torque converter (60) having an input portion (63) connected to said crankshaft (48) and an output portion (68) rotatably connected to said input switching shaft (20) and arranged between said crankshaft (48) and said input switching shaft (20);
wherein the engine power is bypassed to said input switching shaft (20) such that the engine power is transmitted to said output shaft via said first friction engagement element (31) or said second friction engagement element (32);
**characterized in that** said transmission further comprises:
a drive gear shaft (45) arranged on an extension of said first and second input shafts;
a drive side input gear (46) mounted on said drive gear shaft (45) for engaging with a driven side input gear (47) mounted on said input switching shaft (20);
said drive gear shaft (45) being mounted on said torque converter output portion (68).

3. The automatic transmission according to claim 2, wherein:
said torque converter (60) has a lockup clutch (66) for connecting between said input portion (63) and said output portion (68) and is connected and disconnected for interlocking with an engagement of each of said friction clutches (31, 32).

4. The automatic transmission according to any of claims 1 to 3, further comprising:
a first switching gear (21) rotatably provided on said input switching shaft (20) and connected to an output portion of said first friction engagement element(31) for engaging with a drive gear (13a) provided in said first input shaft (10a); and
a second switching gear (22) rotatably provided on said input switching shaft (20) and connected to an output portion of said second friction engagement element (32) for engaging with a drive gear(14a) provided in said second input shaft (10b).

5. The automatic transmission according to claim 4, wherein:
said first and second friction engagement elements (31, 32) are provided between said first switching gear (21) and said second switching gear (22).

6. The automatic transmission according to claim 4, wherein:
said first and second friction engagement elements (31, 32) are provided in an end portion of said input switching shaft (20) so as to be positioned in an outer side of said first switching gear (21) and said second switching gear (22).

7. The automatic transmission according to any of claims 1 to 6, wherein:
said plurality of drive gears (11a, 13a, 15a) provided in said first input shaft (10a) constitute shift gear trains of one of odd and even transmission speed ranges; and
said plurality of drive gears (12a, 14a) provided in said second input shaft (10b) constitute shift gear trains of the other of odd and even transmission speed ranges.

8. The automatic transmission according to any of claims 1 to 7, further comprising:
a hydraulic pump (74) provided with a drive side rotor (74a) and a driven side rotor (74b) and arranged in an end portion of the transmission; and
a pump drive shaft (69) connecting said crankshaft (48) with said drive side rotor (74a) through inner portions of said first and second input shafts (10a, 10b).

9. The automatic transmission according to claim 8, wherein:
said hydraulic pump (74) is provided to the transmission case (9); and
the fluid discharged from said hydraulic pump (74) is supplied to a hydraulic working equipment such as said torque converter (60) and the friction clutch (31, 32).

10. The automatic transmission according to any of claims 1 to 9, further comprising:
an electronic control throttle (27) for adjusting an amount of intake air of the engine so as to synchronously control the engine revolution speed to an output shaft revolution speed.

11. The automatic transmission according to any of claims 1 to 10, further comprising:
a first reverse drive gear (16a1) rotatably provided on said input switching shaft (20);
a reverse driven gear (16b) provided on said output shaft so as to be engaged with said first reverse drive gear (16a1);
a second reverse drive gear (16a2) rotatably provided on said input switching shaft so as to be engaged with a drive gear and provided to one of said first and second input shafts (10a, 10b); and
a reverse clutch (44) for switching said first reverse drive gear (16a1) and said second reverse drive gear (16a2) to a connection state and a disconnection state.

12. The automatic transmission according to any of claims 1 to 10, further comprising:
a reverse drive gear (16a) mounted on one of said first and second input shafts (10a, 10b);
a reverse driven gear (16b) provided on said output shaft so as to integrally rotate;
an idler gear (17) for switching and moving to a state of engaging with said reverse drive gear (16a) and said reverse driven gear (16b) and a state of disengaging therewith; and
a reverse clutch (44) for switching and moving the idler gear.

13. The automatic transmission according to claim 12, wherein:
the engine power is set in a state of transmitting the engine power to said reverse driven gear(16b) via said idler gear (17); and
any one of said two friction engagement elements (31, 32) is set in a disengagement state for a predetermined time so as to switch into a reverse range.

## Patentansprüche

1. Automatikgetriebe für ein Fahrzeug, das Folgendes umfasst:
eine erste Eingangswelle (10a), die mit mehreren Antriebsrädern (11a, 13a, 15a) ausgestattet ist;
eine zweite Eingangswelle (10b), die konzentrisch in der genannten ersten Eingangswelle bereitgestellt ist, so dass sie sich ungehindert dreht und die mit mehreren Antriebsrädern (12a, 14a) ausgestattet ist;
eine Ausgangswelle (19), die parallel zu jeder der genannten Eingangswellen (10a, 10b) angeordnet ist und mit den mehreren Abtriebsrädern (11b, 12b, 13b, 14b, 15b) ausgestattet ist, die ständig mit den genannten Antriebsrädern (11a, 12a, 13a, 14a, 15a) in Eingriff sind, um jeweils Übertragungsrädergetriebe zu bilden;
mehrere Kupplungen (41-43) zum Umschalten der genannten mehreren Übertragungsrädergetriebe zwischen einem Leistungsübertragungszustand und einem Trennungszustand;
eine Eingangsumschaltwelle (20), die parallel zu jeder der genannten Eingangswellen (10a, 10b) und der genannten Ausgangswelle (19) angeordnet ist;
ein erstes Reibungseingriffselement (31), das in der genannten Eingangsumschaltwelle (20) bereitgestellt ist, um zwischen einem Zustand des Übertragens der Leistung an die genannte erste Eingangswelle (10a) und dem Zustand des Trennens der Leistung umzuschalten; und
ein zweites Reibungseingriffselement (32), das an die genannte Eingangsumschaltwelle (20) bereitgestellt ist, um zwischen einem Zustand des Übertragens der Leistung an die genannte zweite Eingangswelle (10b) und dem Zustand des Trennens der Leistung umzuschalten;
wobei die Motorleistung an die genannte Eingangsumschaltwelle (20) umgeleitet wird, so dass die Motorleistung über das genannte erste Reibungseingriffselement (31) oder das genannte zweite Reibungseingriffselement (32) an die genannte Ausgangswelle übertragen wird;
**dadurch gekennzeichnet, dass** das genannte Getriebe weiter Folgendes umfasst:
eine Antriebsradwelle (45), die auf einer Verlängerung der genannten ersten und der genannten zweiten Eingangswelle angeordnet ist;
ein antriebsseitiges Eingangsrad (46), das auf der genannten Antriebsradwelle (45) angebracht ist, um mit einem abtriebsseitigen Eingangsrad (47), das auf der genannten Eingangsunschaltwelle (20) angebracht ist, in Eingriff zu treten;
einen zwischen der genannten Kurbelwelle (48) und der genannten Eingangsumschaltwelle (20) angeordneten Dämpfer (49) zum Dämpfen einer Motorvibration und zum Übertragen der Motorleistung an die genannte Eingangsumschaltwelle, wobei die genannte Antriebsradwelle (45) auf einem Ausgangsabschnitt des genannten Dämpfers (49) angebracht ist.

2. Automatikgetriebe für ein Fahrzeug, das Folgendes umfasst:
eine erste Eingangswelle (10a), die mit mehreren Antriebsrädern (11a, 13a, 15a) ausgestattet ist;
eine zweite Eingangswelle (10b), die konzentrisch in der genannten ersten Eingangswelle bereitgestellt ist, so dass sie sich ungehindert dreht und die mit mehreren Antriebsrädern (12a, 14a) ausgestattet ist;
eine Ausgangswelle (19), die parallel zu jeder der genannten Eingangswellen (10a, 10b) angeordnet ist und mit den mehreren Abtriebsrädern (11b, 12b, 13b, 14b, 15b) ausgestattet ist, die ständig mit den genannten Antriebsrädern (11a, 12a, 13a, 14a, 15a) in Eingriff sind, um jeweils Übertragungsrädergetriebe zu bilden;
mehrere Kupplungen (41-43) zum Umschalten der genannten mehreren Übertragungsrädergetriebe zwischen einem Leistungsübertragungszustand und einem Trennungszustand;
eine Eingangsumschaltwelle (20), die parallel zu jeder der genannten Eingangswellen (10a, 10b) und der genannten Ausgangswelle (19) angeordnet ist;
ein erstes Reibungseingriffselement (31), das in der genannten Eingangsumschaltwelle (20) bereitgestellt ist, um zwischen einem Zustand des Übertragens der Leistung an die genannte erste Eingangswelle (10a) und dem Zustand des Trennens der Leistung umzuschalten;
ein zweites Reihungseingriffselement (32), das an die genannte Eingangsumschahwelle (20) bereitgestellt ist, um zwischen einem Zustand des Übertragens der Leistung an die genannte zweite Eingangswelle 10b) und dem Zustand des Trennens der Leistung umzuschalten; und
einen zwischen der genannten Kurbelwelle (48) und der genannten Eingangsumschaltwelle (20) angeordneten Drehmomentwandler (60) mit einem Eingangsabschnitt (63), der mit der genannten Kurbelwelle (48) verbunden ist und einem Ausgangsabschnitt (68), der drehbar mit der genannten Eingangsumschaltwelle (20) verbunden ist;
wobei die Motorleistung an die genannte Eingangsumschaltwelle (20) umgeleitet wird, so dass die Motorleistung über das genannte erste Reibungseingriffselement (31) oder das genannte zweite Reibungseingriffselement (32) an die genannte Ausgangswelle übertragen wird;
**dadurch gekennzeichnet, dass** das genannte Getriebe weiter Folgendes umfasst:
eine Antriebsradwelle (45), die auf einer Verlängerung der genannten ersten und der genannten zweiten Eingangswelle angeordnet ist;
ein antriebsseitiges Eingangsrad (46), das auf der genannten Antriebsradwelle (45) angebracht ist, um mit einem abtriebsseitigen Eingangsrad (47), das auf der genannten Eingangsumschalwelle (20) angebracht ist, in Eingriff zu treten;
wobei die genannte Antriebsradwelle (45) auf dem genannten Drehmomentwandler-Ausgangsabschnitt (68) angebracht ist.

3. Automatikgetriebe nach Anspruch 2, wobei:
der genannte Drehmomentwandler (60) eine Überbrückungskupplung (66) zum Verbinden zwischen dem genannten Eingangsabschnitt (63) und dem genannten Ausgangsabschnitt (68) aufweist und zur Verriegelung mit einem Eingreifen jeder der genannten Reibungskupplungen (31, 32) verbunden und getrennt wird.

4. Automatikgetriebe nach einem der Ansprüche 1 bis 3, das weiter Folgendes umfasst:
ein erstes Umschaltrad (21), das drehbar auf der genannten Eingangsumschaltwelle (20) bereitgestellt ist und mit einem Ausgangsabschnitt des genannten ersten Reibungseingriffselements (31) verbunden ist, um mit einem in der genannten ersten Eingangswelle (10a) bereitgestellten Antriebsrad (13a) in Eingriff zu treten; und
ein zweites Umschaltrad (22), das drehbar auf der genannten Eingangsumschaltwelle (20) bereitgestellt ist und mit einem Ausgangsabschnitt des genannten zweiten Reibungseingriffselements (32) verbunden ist, um mit einem in der genannten zweiten Eingangswelle (10b) bereitgestellten Antriebsrad (14a) in Eingriff zu treten.

5. Automatikgetriebe nach Anspruch 4, wobei:
das genannte erste und das genannte zweite Reibungseingriffselement (31, 32) zwischen dem genannten ersten Umschaltrad (21) und dem genannten zweiten Umschaltrad (22) bereitgestellt sind.

6. Automatikgetriebe nach Anspruch 4, wobei:
das genannte erste und das genannte zweite Reibungseingriffselement (31, 32) in einem Endabschnitt der genannten Eingangsumschaltwelle (20) bereitgestellt sind, um in einer äußeren Seite des genannten ersten Umschaltrads (21) und des genannten zweiten Umschaltrads (22) positioniert zu sein.

7. Automatikgetriebe nach einem der Ansprüche 1 bis 6, wobei:
die genannten mehreren Antriebsräder (11a, 13a, 15a), die in der genannten ersten Antriebswelle (10a) bereitgestellt sind, Schalträdergetriebe von einem von ungeraden und geraden Getriebedrelizahlbereichen ausmachen; und die genannten mehreren Antriebsräder (12a, 14a), die in der genannten zweiten Antriebswelle (10b) bereitgestellt sind, Schalträdergetriebe des jeweils anderen von ungeraden und geraden Getriebedrehzahlbereichen ausmachen.

8. Automatikgetriebe nach einem der Ansprüche 1 bis 7, das weiter Folgendes umfasst:
eine Hydraulikpumpe (74), die mit einem antriebsseitigen Rotor (74a) und einem abtriebsseitigen Rotor (74b) ausgestattet ist und in einem Endabschnitt des Getriebes angeordnet ist; und
eine Pumpenantriebswelle (69), die die genannte Kurbelwelle (48) durch innere Abschnitte der genannten ersten und der genannten zweiten Eingangswelle (10a, 10b) mit dem genannten antriebsseitigen Rotor (74a) verbindet.

9. Automatikgetriebe nach Anspruch 8, wobei:
die genante Hydraulikpumpe (74) an das Getriebegehäuse (9) bereitgestellt ist; und
das aus der genannten Hydraulikpumpe (74) ausgelassene Hydraulikfluid an eine hydraulische Arbeitsausrüstung, wie beispielsweise den genannten Drehmomentwandler (60) und die Reibungskupplung (31, 32) geliefert wird.

10. Automatikgetriebe nach einem der Ansprüche 1 bis 9, das weiter Folgendes umfasst:
eine elektronisch gesteuerte Drosselklappe (27) zum Einstellen einer Menge von Ansaugluft des Motors, um die Motorumdrehungsgeschwindigkeit synchron an eine Ausgangswellen-Umdrehungsgeschwindigkeit zu regeln.

11. Automatikgetriebe nach einem der Ansprüche 1 bis 10, das weiter Folgendes umfasst:
ein erstes Rückwärtsgang-Antriebsrad (16a1), das drehbar auf der genannten Eingangsumschaltwelle (20) bereitgestellt ist;
ein Rückwärtsgang-Abtriebsrad (16b), das auf der genannten Ausgangswelle bereitgestellt ist, um mit dem genannten ersten Rückwärtsgang-Antriebsrad (16a1) in Eingriff zu sein;
ein zweites Rückwärtsgang-Antriebsrad (16a2), das drehbar auf der genannten Eingangsumschaltwelle bereitgestellt ist, um mit einem Antriebsrad in Eingriff zu sein und an die genannte erste oder die genannte zweite Eingangswelle (10a, 10b) bereitgestellt wird; und
eine Rückwärtsgangkupplung (44) zum Umschalten des genannten ersten Rückwärtsgang-Antriebsrads (16a1) und des genannten zweiten Rückwärtsgang-Antriebsrads (16a2) in einen Verbindungszustand und einen Trennungszustand.

12. Automatikgetriebe nach einem der Ansprüche 1 bis 10, das weiter Folgendes umfasst:
ein Rückwärtsgang-Antriebsrad (16a), das auf der genannten ersten oder der genannten zweiten Eingangswelle (10a, 10b) angebracht ist;
ein Rückwärtsgang-Abtriebsrad (16b), das auf de genannten Ausgangswelle bereitgestellt ist um integral zu drehen;
ein Zwischenrad (17) zum Umschalten und Verschieben in einen Zustand des Eingreifens mit dem genannten Rückwärtsgang-Antriebsrad (16a) und dem genannten Rückwärtsgang-Abtriebsrad (16b) und einen Zustand des Ausrückens davon; und
eine Rückwärtsgangkulpplung (44) zum Umschalten und Verschieben des Zwischenrads.

13. Automatikgetriebe nach Anspruch 12, wobei:
die Motorleistung in einen Zustand des Übertragens der Motorleistung über das genannte Zwischenrad (17) an das genannte Rückwärtsgang-Abtriebsrad (16b) gesetzt ist; und
eines der genannten zwei Reibungseingriffselemente (31, 32) für eine vorherbestimmte Zeit in einen Ausrückzustand gesetzt ist, um in einen Rückwärtsgangbereich umzuschalten.

## Revendications

1. Transmission automatique pour un véhicule, comportant :
un premier arbre d'entrée (10a) muni d'une pluralité d'engrenages d'entraînement (11a, 13a, 15a) ;
un second arbre d'entrée (10b) mis en oeuvre de manière concentrique dans ledit premier arbre d'entrée de manière à tourner librement et muni d'une pluralité d'engrenages d'entraînement (12a, 14a);
un arbre de sortie (19) arrangé de manière parallèle par rapport à chacun desdits arbres d'entrée (10a, 10b) et muni de la pluralité d'engrenages menés (11b, 12b, 13b, 14b, 15b) se mettant constamment en prise avec lesdits engrenages d'entraînement (11a, 12a, 13a, 14a, 15a) de manière à former respectivement des trains d'engrenages de transmission ;
une pluralité d'embrayages (41-43) permettant de faire passer ladite pluralité de trains d'engrenages de transmission entre un état de transmission de puissance et un état de déconnexion ;
un arbre de commande d'entrée (20) arrangé de manière parallèle par rapport à chacun desdits arbres d'entrée (10a, 10b) et audit arbre de sortie (19) ;
un premier élément de mise en prise par friction (31) mis en oeuvre dans ledit arbre de commande d'entrée (20) permettant de passer entre un état de transmission de la puissance audit premier arbre d'entrée (10a) et l'état de déconnexion de la puissance ; et
un second élément de mise en prise par friction (32) mis en oeuvre sur ledit arbre de commande d'entrée (20) et permettant de passer entre un état de transmission de la puissance audit second arbre d'entrée (10b) et l'état de déconnexion de la puissance ;
dans lequel la puissance du moteur est court-circuitée jusque dans ledit arbre de commande d'entrée (20) de telle manière que la puissance du moteur est transmise audit arbre de sortie par le biais dudit premier élément de mise en prise par friction (31) ou dudit second élément de mise en prise par friction (32) ;
**caractérisée en ce que** ladite transmission comporte par ailleurs :
un arbre d'engrenage d'entraînement (45) arrangé sur un prolongement desdits premier et second arbres d'entrée ;
un engrenage d'entrée côté entraînement (46) monté sur ledit arbre d'engrenage d'entraînement (45) à des fins de mise en prise avec un engrenage d'entrée côté mené (47) monté sur ledit arbre de commande d'entrée (20) ;
un amortisseur (49) arrangé entre ledit vilebrequin (48) et ledit arbre de commande d'entrée (20) à des fins d'amortissement des vibrations d'un moteur et à des fins de transmission de la puissance du moteur audit arbre de commande d'entrée, ledit arbre d'engrenage d'entraînement (45) étant monté sur une partie de sortie dudit amortisseur (49).

2. Transmission automatique pour un véhicule, comportant :
un premier arbre d'entrée (10a) muni d'une pluralité d'engrenages d'entraînement 11a, 13a, 15a) ;
un second arbre d'entrée (10b) mis en oeuvre de manière concentrique dans ledit premier arbre d'entrée de manière à tourner librement et muni d'une pluralité d'engrenages d'entraînement (12a, 14a);
un arbre de sortie (19) arrangé de manière parallèle par rapport à chacun desdits arbres d'entrée (10a, 10b) et muni de la pluralité d'engrenages menés (11b, 12b, 13b, 14b, 15b) se mettant constamment en prise avec lesdits engrenages d'entraînement (11a, 12a, 13a, 14a, 15a) de manière à former respectivement des trains d'engrenages de transmission ;
une pluralité d'embrayages (41-43) permettant de faire passer ladite pluralité de trains d'engrenages de transmission entre un état de transmission de puissance et un état de déconnexion ;
un arbre de commande d'entrée (20) arrangé de manière parallèle par rapport à chacun desdits arbres d'entrée (10a, 10b) et audit arbre de sortie (19) ;
un premier élément de mise en prise par friction (31) mis en oeuvre dans ledit arbre de commande d'entrée (20) permettant de passer entre un état de transmission de la puissance audit premier arbre d'entrée (10a) et l'état de déconnexion de la puissance ;
un second élément de mise en prise par friction (32) mis en oeuvre sur ledit arbre de commande d'entrée (20) et permettant de passer entre un état de transmission de la puissance audit second arbre d'entrée (10b) et l'état de déconnexion de la puissance ; et
un convertisseur de couple (60) ayant une partie d'entrée (63) connectée audit vilebrequin (48) et une partie de sortie (68) connectée de manière rotative audit arbre de commande d'entrée (20) et se trouvant entre ledit vilebrequin (48) et ledit arbre de commande d'entrée (20) ;
dans lequel la puissance du moteur est court-circuitée jusque dans ledit arbre de commande d'entrée (20) de telle manière que la puissance du moteur est transmise audit arbre de sortie par le biais dudit premier élément de mise en prise par friction (31) ou dudit second élément de mise en prise par friction (32) ;
**caractérisée en ce que** ladite transmission comporte par ailleurs :
un arbre d'engrenage d'entraînement (45) arrangé sur un prolongement desdits premier et second arbres d'entrée ;
un engrenage d'entrée côté entraînement (46) monté sur ledit arbre d'engrenage d'entraînement (45) à des fins de mise en prise avec un engrenage d'entrée côté mené (47) monté sur ledit arbre de commande d'entrée (20) ;
ledit arbre d'engrenage d'entraînement (45) étant monté sur ladite partie de sortie (68) du convertisseur de couple.

3. Transmission automatique selon la revendication 2, dans lequel :
ledit convertisseur de couple (60) a un embrayage de verrouillage (66) à des fins de connexion entre ladite partie d'entrée (63) et ladite partie de sortie (68) et est connecté et déconnecté à des fins d'interverrouillage avec une mise en prise de chacun desdits embrayages à friction (31, 32).

4. Transmission automatique selon l'une quelconque des revendications 1 à 3, comportant par ailleurs :
un premier engrenage de commande (21) mis en oeuvre de manière rotative sur ledit arbre de commande d'entrée (20) et connecté à une partie de sortie dudit premier élément de mise en prise par friction (31) à des fins de mise en prise avec un engrenage d'entraînement (13a) mis en oeuvre dans ledit premier arbre d'entrée (10a); et
un second engrenage de commande (22) mis en oeuvre de manière rotative sur ledit arbre de commande d'entrée (20) et connecté à une partie de sortie dudit second élément de mise en prise par friction (32) à des fins de mise en prise avec un engrenage d'entraînement (14a) mis en oeuvre dans ledit second arbre d'entrée (10b).

5. Transmission automatique selon la revendication 4, dans lequel :
lesdits premier et second éléments de mise en prise par friction (31, 32) sont mis en oeuvre entre ledit premier engrenage de commande (21) et ledit second engrenage de commande (22).

6. Transmission automatique selon la revendication 4, dans lequel :
lesdits premier et second éléments de mise en prise par friction (31, 32) sont mis en oeuvre dans une partie d'extrémité dudit arbre de commande d'entrée (20) à des fins de positionnement dans un côté extérieur dudit premier engrenage de commande (21) et dudit second engrenage de commande (22).

7. Transmission automatique selon l'une quelconque des revendications 1 à 6, dans lequel :
ladite pluralité d'engrenages d'entraînement (11a, 13a, 15a) mis en oeuvre dans ledit premier arbre d'entrée (10a) constituent des trains d'engrenages de commande de l'une des plages de vitesses de transmission du type pair et impair ; et
ladite pluralité d'engrenages d'entraînement (12a, 14a) mis en oeuvre dans ledit second arbre d'entrée (10b) constituent des trains d'engrenages de commande de l'autre des plages de vitesses de transmission du type pair et impair.

8. Transmission automatique selon l'une quelconque des revendications 1 à 7, comportant par ailleurs :
une pompe hydraulique (74) munie d'un rotor côté entraînement (74a) et d'un rotor côté mené (74b) et se trouvant dans une partie d'extrémité de la transmission ; et
un arbre d'entraînement de pompe (69) connectant ledit vilebrequin (48) audit rotor côté entraînement (74a) par des parties intérieures desdits premier et second arbres d'entrée (10a, 10b).

9. Transmission automatique selon la revendication 8, dans lequel :
ladite pompe hydraulique (74) est mise en oeuvre sur le boîtier de transmission (9) ; et
le fluide déchargé en provenance de ladite pompe hydraulique (74) est fourni à un matériel à fonctionnement hydraulique tel ledit convertisseur de couple (60) et l'embrayage à friction (31, 32).

10. Transmission automatique selon l'une quelconque des revendications 1 à 9, comportant par ailleurs :
un papillon de commande électronique (27) permettant d'ajuster une quantité d'air d'admission du moteur de manière à commander, de manière synchrone, la vitesse de rotation du moteur par rapport à la vitesse de rotation d'un arbre de sortie.

11. Transmission automatique selon l'une quelconque des revendications 1 à 10, comportant par ailleurs :
un premier engrenage d'entraînement de marche arrière (16a1) mis en oeuvre de manière rotative sur ledit arbre de commande d'entrée (20);
un engrenage mené de marche arrière (16b) mis en oeuvre sur ledit arbre de sortie à des fins de mise en prise avec ledit premier engrenage d'entraînement de marche arrière (16a1);
un second engrenage d'entraînement de marche arrière (16a2) mis en oeuvre de manière rotative sur ledit arbre de commande d'entrée à des fins de mise en prise avec un engrenage d'entraînement et mis en oeuvre sur l'un desdits premier et second arbres d'entrée (10a, 10b); et
un embrayage de marche arrière (44) permettant de faire passer ledit premier engrenage d'entraînement de marche arrière (16a1) et ledit second engrenage d'entraînement de marche arrière (16a2) sur un état de connexion et un état de déconnexion.

12. Transmission automatique selon l'une quelconque des revendications 1 à 10, comportant par ailleurs :
un engrenage d'entraînement de marche arrière (16a) monté sur l'un desdits premier et second arbres d'entrée (10a, 10b);
un engrenage mené de marche arrière (16b) mis en oeuvre sur ledit arbre de sortie de manière à tourner de manière intégrale ;
un engrenage baladeur (17) permettant de faire passer et d'envoyer sur un état de mise en prise avec ledit engrenage d'entraînement de marche arrière (16a) et ledit engrenage mené de marche arrière (16b) et un état de mise hors de prise par rapport à ceux-ci ; et
un embrayage de marche arrière (44) pour commander et déplacer l'engrenage baladeur.

13. Transmission automatique selon la revendication 12, dans lequel :
la puissance du moteur est réglée dans un état de transmission de la puissance du moteur audit engrenage mené de marche arrière (16b) par le biais dudit engrenage baladeur (17) ; et
l'un quelconque desdits deux éléments de mise en prise par friction (31, 32) est réglé dans un état de mise hors de prise pendant un temps prédéterminé de manière à passer dans une plage de marche arrière.
